# DEMANDE DE BREVET EUROPEEN

(11) **EP 1 920 664 A1**
(43) Date de publication de la demande: **14.05.2008**
(21) Numéro de dépôt: 07301464.9
(22) Date de dépôt: 15.10.2007
(51) Int. Cl.: A23L 1/064, A23B 7/055, A23B 7/04, A23L 3/36

(54) **Procédé et dispositif de congélation de purée de fruits ou de légumes**

(30) Priorité: 16.10.2006 FR 0654289
(71) Demandeur: Caramanfruit Rhône-Alpes, 26140 Anneyron (FR)
(72) Inventeur: Neuvillers, Franck, 95290, L' isle Adam (FR)
(74) Mandataire: Palix, Stéphane

(57) **Abrégé**

La présente invention concerne une préparation alimentaire surgelée à base de fruits et/ou de légumes broyés se présentant sous la forme d'un palet (**1**) doté d'une base sensiblement plane (**2**) surmontée d'un monticule (**3**), un procédé et des dispositifs adaptés à son obtention.

## Description

### Domaine technique

L'invention se rapporte au domaine de la surgélation dans le domaine alimentaire.

Dans le cadre de la présente invention, il est proposé un procédé et une installation permettant la surgélation de préparations alimentaires à base de fruits et/ou de légumes broyés, incorporant éventuellement des morceaux, conditionnées en petites quantités et présentant des qualités tout à fait remarquables, tant en termes de qualité que d'homogénéité. En outre, de telles préparations alimentaires surgelées ne collent pas.

### Etat de l'Art

La surgélation constitue un moyen de conservation, par abaissement très rapide de la température au-dessous de -18°C, largement utilisé dans le domaine alimentaire.

Cette technique de congélation est particulièrement adaptée aux fruits et/ou légumes, dans le but de conserver leurs arômes et leurs qualités nutritionnelles.

Une autre préoccupation actuelle concerne le conditionnement sous forme individualisée ou en petites quantités des produits alimentaires surgelés, permettant de décongeler la quantité strictement nécessaire à l'utilisation envisagée. Une telle pratique est connue sous le nom d'IQF (Individual Quick Freezing).

De telles préparations alimentaires surgelées sont utilisées notamment en pâtisserie. Les purées de fruits ou de légumes ainsi conditionnées sont également utilisées pour la préparation de boissons.

La difficulté essentielle dans la surgélation, en particulier des denrées contenant du sucre, est d'obtenir une congélation rapide de la masse entière de la préparation alimentaire. En effet, lorsque le temps de surgélation est trop élevé, on assiste à une migration de sucres dans la préparation. Il en résulte une répartition non homogène des sucres dans les produits surgelés, qui de surcroît collent et sont donc difficiles à séparer.

Le document FR-A- 2 786 368 décrit un procédé dans lequel on étale une couche mince de purée sur un cylindre refroidi, puis on surgèle cette couche mince. Ensuite, la couche mince surgelée est râclée, de façon à obtenir des copeaux de purée surgelés. Des galets individualisés sont obtenus en agglomérant ces copeaux et en moulant les galets à l'aide d'une presse formée entre deux empreintes.

Dans un tel procédé, le contrôle des paramètres de fabrication s'avère délicat, avec un risque de perte des qualités organoleptiques du produit dans les galets obtenus. En outre, c'est un procédé en plusieurs étapes, lourd à mettre en oeuvre, dans lequel les dimensions et la forme des galets sont figées.

Alternativement, le document FR-A- 2 881 927 propose le dépôt en continu d'un produit alimentaire sous la forme d'un long boudin, qui est surgelé sous cette forme puis divisé, par découpe, sous forme de galets présentant deux faces transversales planes.

Il existe donc un besoin évident de développer des procédés simplifiés pour obtenir des portions individualisées de purées de fruits et/ou de légumes, conservant toutes leurs qualités organoleptiques et ne collant pas.

Grâce au procédé et au dispositif décrits dans la présente invention, il est possible d'obtenir de tels produits avec des qualités remarquables.

### Exposé de l'invention

L'invention concerne donc une préparation alimentaire surgelée à base de fruits et/ou de légumes broyés.

Selon l'invention, cette préparation après surgélation présente une face plane unique, correspondant à sa face inférieure. Cette base sensiblement plane est surmontée d'un monticule. La forme irrégulière de la surface supérieure peut être rapprochée d'une forme en "palet".

Cette forme particulière résulte du procédé mis en oeuvre selon l'invention, à savoir le dépôt de gouttes de la préparation alimentaire sur un film plan, conférant la surface plane, et leur surgélation en quelques minutes qui permet de conserver approximativement la forme du dépôt.

Il apparaît clairement que selon l'invention et contrairement à l'art antérieur, la surgélation a lieu directement sur les portions individualisées.

On appelle fruits et/ou légumes broyés, des fruits ou légumes desquels on a extrait la pulpe.

Après passage sur un tamis, un tel broyat est alors appelé une purée. Alternativement, après cuisson et éventuellement ajout de sucre, le broyat ou la purée constituent des compotes.

La préparation alimentaire à surgeler peut donc aussi bien être un broyat, une purée ou une compote.

A priori, tout type de fruits ou de légumes peut être utilisé dans le cadre de l'invention. Des mélanges de fruits et/ou de légumes sont également visés par l'invention.

Une des qualités recherchées pour un produit selon l'invention est le fait qu'il ne colle pas après surgélation. Cette qualité est généralement obtenue lorsque la préparation à base de fruits et/ou légumes broyés possède un degré Brix inférieur ou égal à 20.

Le degré Brix, également appelé indice ou taux de Brix, est un paramètre couramment utilisé en agronomie, mesuré à l'aide d'un réfractomètre. Il permet de quantifier le taux massique en sucre dans la préparation alimentaire.

Ainsi, la préparation alimentaire surgelée concernée par l'invention peut être de la compote allégée, puisque la législation prévoit cette dénomination pour des degrés Brix de 17 +/- 1.

A titre d'exemples, le cassis et la noix de coco ont des degrés Brix très élevés, de l'ordre de 18, ne nécessitant pas l'ajout de sucre.

En revanche, le citron ou la fraise ont des taux en sucre de l'ordre de 5 Brix, ce qui autorise l'ajout de sucre, par exemple à hauteur de 7 Brix.

De manière très avantageuse et selon l'invention, la surgélation des préparations alimentaires et leur conditionnement en petites portions qui ne collent pas ne nécessitent l'adjonction d'aucune substance, en particulier de type conservateurs, texturants, ....

Classiquement, la préparation alimentaire surgelée à base de fruits et/ou de légumes broyés selon l'invention a un poids de l'ordre de 3 grammes, une épaisseur de quelques millimètres (par exemple 2-3 mm) pour une dimension maximale de la face plane de quelques dizaines de millimètres (par exemple 25 mm).

Dans un mode de réalisation particulier, l'invention concerne une préparation alimentaire surgelée à base de fruits et/ou de légumes broyés qui comprend des morceaux de fruits et/ou de légumes.

On entend ici par le terme morceaux, des "cubes" de fruits et/ou de légumes prédécoupés, introduits intentionnellement dans la préparation alimentaire. Ceux-ci se différencient aisément d'éventuels fragments solides persistant dans le broyat, en l'absence de tamisage.

Typiquement, de tels morceaux ont les dimensions d'un cube de 5 à 15 mm de côté. Les préparations alimentaires surgelées intégrant des morceaux sont donc plus grosses, avec un poids allant de 6 à 15 grammes, les morceaux pouvant représenter de 40 à 70 % du poids.

Comme déjà dit, la forme très spécifique des préparations alimentaires surgelées selon l'invention, à savoir une forme en palets individualisés dotés d'une face plane unique servant d'une base surmontée d'un monticule, a pu être obtenue grâce à la mise au point d'un procédé très bien maîtrisé.

Ainsi et selon un second aspect, l'invention concerne un procédé de surgélation d'une préparation alimentaire à base de fruits et/ou de légumes broyés comprenant les étapes suivantes :
- éventuellement correction du degré Brix de la préparation alimentaire;
- dépôt par gravité et de manière séquentielle de la préparation alimentaire sur un film convoyeur;
- transfert du film convoyeur dans une machine de surgélation.

Contrairement aux enseignements de l'art antérieur, la préparation alimentaire est donc déposée sous forme de gouttes individualisées. En pratique, ceci est réalisé par un dépôt séquentiel et discontinu de la préparation sur le convoyeur.

La première étape facultative de ce procédé est mise en oeuvre, notamment pour les fruits présentant un faible degré Brix (notamment le citron), tel que décrit plus haut. Comme déjà dit le degré Brix final ne devra pas excéder 20. Cette correction du taux de sucre est avantageusement réalisée par adjonction de sucre, préférentiellement de saccharose.

Une étape importante de ce procédé est le dépôt par gravité et de manière séquentielle de la préparation alimentaire à base de fruits et/ou de légumes broyés.

Ce dépôt se fait sur un film convoyeur à température ambiante, typiquement de 10 à 18°C, qui est ensuite transféré dans une machine de surgélation. Préférentiellement, le transfert dure environ de 10 à 15 secondes

Le dépôt séquentiel permet d'obtenir des "gouttes" individualisées. En pratique, il est contrôlé par l'ouverture intermittente d'orifices libérant la préparation alimentaire, comme décrit plus en détail ci-dessous en rapport avec le dispositif de dépôt.

La partie en contact avec le film convoyeur va définir la face inférieure sensiblement plane du produit surgelé.

Dans ce procédé, la viscosité de la préparation alimentaire est un élément clef pour obtenir les portions individualisées souhaitées. La viscosité, exprimée en centipoises et mesurable par un appareillage classique de type CENCO doit être telle que le dépôt avant surgélation ne s'étale pas excessivement, pour ne pas entrer en contact avec les dépôts voisins.

Deux paramètres importants pour le contrôle de la viscosité résident dans la température de la préparation alimentaire au moment du dépôt et la pression de dépôt.

En pratique, la pression de dépôt est contrôlable au niveau du dispositif de dépôt utilisé pour la mise en oeuvre du procédé selon l'invention puisqu'elle dépend essentiellement de la hauteur parcourue par la préparation sous la force de gravitation.

Concernant la température de la préparation alimentaire, plus elle est basse, plus la préparation est visqueuse. Les moyens techniques pour refroidir et contrôler le refroidissement d'une préparation alimentaire sont connus et sont aisément intégrés à l'installation utilisée pour la mise en oeuvre du procédé selon l'invention.

La taille et le poids du dépôt dépendent également du dispositif de distribution de la préparation alimentaire, notamment du diamètre des ouvertures et de leur temps d'ouverture, ainsi que de la vitesse de déroulement du film convoyeur. Ces paramètres sont contrôlables au niveau de l'installation utilisée pour la mise en oeuvre d'un tel procédé, illustrée ci-dessous.

Lorsque des morceaux de fruits et de légumes doivent intégrés dans le broyat, une certaine poussée doit être exercée sur la préparation alimentaire au moment du dépôt, ou de manière légèrement décalée, pour assurer une distribution homogène des morceaux dans les gouttes déposées.

La température de surgélation a également une influence sur le produit final, et en particulier sur ses qualités collantes. Ainsi, plus la température de surgélation est basse, moindre est le risque d'avoir des phénomènes de collage. De fait, on obtient des meilleurs résultats à une température de -50°C, plutôt qu'à -30°C.

Pour cela, le moyen de surgélation le plus adapté est la mise en contact des dépôts avec un liquide cryogénique, notamment l'azote liquide, à l'intérieur d'un "tunnel" de congélation de configuration classique dans le domaine alimentaire.

Il apparaît de ce qui précède que la mise en oeuvre d'un procédé selon l'invention nécessite l'utilisation d'un appareillage adapté, notamment au niveau du dispositif de dépôt de la préparation alimentaire à base de fruits et/ou de légumes broyés en vue de sa surgélation.

Celui-ci se caractérise essentiellement par :
- un réservoir contenant la préparation alimentaire;
- un système de distribution de la préparation alimentaire muni d'orifices à ouverture séquentielle ;
- un système de régulation de la pression régnant sur la préparation alimentaire au niveau des orifices.

Il s'avère qu'en pratique, le dispositif de dépôt pour une préparation alimentaire sous la forme d'un broyat est distinct en plusieurs points de celui relatif à une préparation alimentaire intégrant des morceaux de fruits et/ou de légumes. Dans la suite de l'exposé, les spécificités des dispositifs pour chaque application vont donc être décrites.

Le réservoir contenant la préparation alimentaire est classiquement en inox et est alimenté en continu par la préparation alimentaire à surgeler. Cette alimentation se fait classiquement par un système de pompe et de tuyau.

Le réservoir est avantageusement situé à terre, pour plus d'ergonomie de l'installation. Le dispositif de dépôt comprend alors des moyens, avantageusement sous la forme d'une pompe et de tuyaux, pour l'acheminer contre la gravité du réservoir vers le système de distribution.

De manière avantageuse et afin de limiter les pertes, ce système d'acheminement de la préparation alimentaire est en boucle fermée : la préparation non distribuée est réacheminée et réintroduite dans le réservoir. Des moyens de réintroduction dans le réservoir de ce trop plein du système de distribution prennent avantageusement la forme d'un tuyau, situé au-dessus du tuyau d'arrivée aboutissant dans le réservoir.

Dans ce cas de figure, la pression régnant sur la préparation alimentaire au niveau des orifices du système de distribution, qui permet de jouer sur la viscosité et la quantité déposée, peut être régulée en fonction de la hauteur entre l'arrivée de la préparation alimentaire et son réacheminement vers le réservoir.

Dans ce mode de réalisation, le système de distribution se présente avantageusement sous la forme d'un double système de cylindres, alimentés par le moyen d'acheminement de la préparation alimentaire depuis le réservoir. Cette alimentation peut avoir lieu en plusieurs points du cylindre pour assurer une répartition homogène et rapide de la préparation, avantageusement à leurs extrémités. Le système d'acheminement, classiquement sous la forme d'un tuyau, se sépare alors en plusieurs bras aboutissant dans le système de distribution.

De manière essentielle, ce système de distribution est doté d'orifices autorisant le passage de la préparation alimentaire dans la quantité souhaitée. Ces orifices sont situés au fond du cylindre. Un diamètre classique pour ces orifices est d'environ 8 mm quand il s'agit de déposer une préparation alimentaire à base de fruits et/ou de légumes broyés.

Pour assurer le dépôt séquentiel, l'ouverture des orifices du système de distribution est assurée par intermittence.

Dans un mode de réalisation avantageux, ceci est réalisé au moyen d'une structure, plaquée au fond du système de distribution, munie d'ouvertures traversantes et animée d'un mouvement de va et vient à l'intérieur du système de distribution, permettant la coïncidence séquentielle entre ses ouvertures et les orifices présents au fond du système de distribution. Dans le cas où le système de distribution est un cylindre, cette structure est avantageusement un cylindre interne.

De manière préférentielle dans le cas du dépôt d'une préparation alimentaire à base de fruits et/ou de légumes broyés, le système de distribution, avantageusement un double système de cylindres, est également animé d'un mouvement de va et vient latéral par rapport au film convoyeur. Ceci permet de faire un dépôt en quinconce et ainsi d'optimiser la surface utile sur le film convoyeur. De manière adaptée, l'ouverture des orifices est synchronisée avec le mouvement de va et vient du système de distribution. En pratique, ce mouvement latéral du cylindre peut être autorisé grâce à la présence de soufflets à la jonction des bras du tuyau d'acheminement et du cylindre de distribution.

Comme déjà dit, le dépôt d'une préparation alimentaire à base de fruits et/ou légumes broyés contenant des morceaux nécessite l'adaptation du dispositif de dépôt, liée à la nature de la préparation finale.

Dans ce cas, la préparation contenant les morceaux est acheminée à l'aide d'un système pompe/tuyaux au dessus du système de distribution, qui assure également le rôle de réservoir transitoire. La pression régnant sur la préparation alimentaire au niveau des orifices, à savoir au fond du réservoir, est alors directement liée à la hauteur de la préparation alimentaire présente dans le réservoir.

Le système de distribution/réservoir est placé en hauteur, au dessus du film convoyeur. De manière préférée, ce réservoir a la forme d'un parallélépipède rectangle, muni d'orifices dans sa partie inférieure (fond). Dans la mesure où les orifices doivent laisser le passage à des morceaux de fruits et/ou de légumes de dimensions classiques de 10x10 mm, le diamètre des orifices est avantageusement de l'ordre de 2 cm.

Dans sa partie supérieure, ce système est alimenté en préparation alimentaire contenant des morceaux de fruits et/ou de légumes à l'aide d'un répartiteur situé au dessus et débouchant dans le système. Ce répartiteur prend avantageusement la forme d'un entonnoir renversé, de dimensions inférieures au réservoir lui-même. Ce répartiteur est lui-même alimenté à sa surface par un tuyau acheminant la préparation alimentaire à base de fruits et/ou de légumes broyés contenant les morceaux. Le débit de l'alimentation peut être contrôlé, notamment au moyen d'une vanne située au niveau de ce tuyau.

A l'intérieur du réservoir est disposé un râtelier animé d'un mouvement de va et vient vertical, avantageusement à l'aide d'un vérin. Ce râtelier est équipé de dents situées, dans la position basse du râtelier à l'aplomb, des orifices du système de distribution. Le mouvement vertical du râtelier permet d'homogénéiser l'incorporation des morceaux dans le mélange. La descente des dents permet en outre d'exercer une pression au moment du dépôt, forçant le passage des morceaux et donc leur incorporation homogène dans la préparation déposée.

Là encore, l'ouverture séquentielle des orifices est assurée au moyen d'une structure, avantageusement une plaque, munie d'ouvertures et animée d'un mouvement de va et vient latéral à l'intérieur du système de distribution, permettant la coïncidence séquentielle entre les ouvertures de la plaque et les orifices présents au fond du système de distribution.

Une séquence classique dans ce dispositif de dépôt est donc : descente des dents - ouverture des orifices - passage du broyat et des morceaux - fermeture des orifices - montée des dents.

Il a été mentionné plus haut qu'un des critères clef pour le contrôle de la viscosité était le contrôle de la température de la préparation alimentaire déposée. Ce contrôle de la température, en l'occurrence l'abaissement de la température de la préparation alimentaire à une température généralement comprise entre -6°C (citron) et +14°C (noix de coco), peut être assuré en amont du dispositif de dépôt, notamment dans la cuve de stockage. Toutefois, le refroidissement ou le maintien à une température basse de la préparation alimentaire peut également être assuré au niveau du dispositif de dépôt, par tout moyen classique. Avantageusement, le dispositif selon l'invention comprend donc un système de régulation de la température de la préparation alimentaire. Notamment, le réservoir contenant la préparation alimentaire peut être réfrigéré, avec un système de thermostat permettant l'adaptation de la température optimale pour chaque type de fruits et/ou de légumes.

Comme déjà dit et au niveau de l'installation complète de surgélation, le film convoyeur peut également être refroidi.

Les dispositifs de dépôt selon l'invention sont donc destinés à être intégrés dans une installation de surgélation plus complète.

En amont du dispositif de dépôt, certaines des fonctions suivantes peuvent être remplies :
- tris des fruits et/ou légumes ;
- lavage ;
- broyage ;
- tamisage ;
- chauffage ;
- contrôle du degré Brix ;
- ajout de sucre ;
- préparation des morceaux ;
- calibrage des morceaux ;
- refroidissement de la préparation alimentaire.

Toutes ces étapes peuvent être automatisées à l'aide de moyens connus de l'homme du métier.

La dernière étape en amont du dispositif de dépôt selon l'invention est l'acheminement de la préparation alimentaire, et éventuellement des morceaux, vers le réservoir du dispositif.

Au cours du dépôt, la préparation alimentaire est disposée, sous forme de gouttes, sur un film convoyeur puis transportée jusqu'à une machine de surgélation, avantageusement un tunnel de surgélation à l'azote.

A la sortie de la machine de surgélation se trouvent donc des moyens de récupération des produits surgelés, classiquement sous la forme d'un bac en inox placé en contrebas, au niveau de la fin de la course du film convoyeur. Les produits surgelés sont alors pris en charge pour leur conditionnement, conformément aux pratiques de l'homme du métier dans ce domaine technique.

Pour rappel, à l'issue du procédé selon l'invention, les produits surgelés se présentent sous la forme de palets individualisés, caractérisés par une face sensiblement plane unique servant de base, surmontée d'un monticule. A noter que la forme au moment du dépôt correspond sensiblement à la forme du produit final surgelé.

Ce dépôt en petites quantités permet une surgélation très rapide de la préparation alimentaire et évite ainsi la migration du sucre, responsable notamment des phénomènes de collage entre les portions individualisées. En outre, ce procédé permet d'obtenir des portions individualisées de composition homogène.

Le procédé selon l'invention présente comme autre avantage d'être plus simple et plus rapide que ceux de l'art antérieur puisqu'il ne comprend pas d'étapes de découpe ou de mise ne forme des portions individualisées de préparation alimentaire.

### Description sommaire des figures

La manière de réaliser l'invention ainsi que les avantages qui en découlent ressortiront bien de la description du mode de réalisation qui suit, à l'appui des figures annexées dans lesquelles :
La figure 1 représente un schéma des palets de préparation alimentaire surgelée à base de fruits et/ou de légumes broyés (A), ou incorporant des morceaux de fruits et/ou de légumes (B), obtenus dans le cadre de l'invention.
La figure 2 représente un schéma du dispositif de dépôt d'une préparation alimentaire à base de fruits et/ou de légumes broyés en vue de sa surgélation.
La figure 3 représente un schéma du dispositif de dépôt d'une préparation alimentaire à base de fruits et/ou de légumes broyés comprenant des morceaux de fruits et/ou de légumes en vue de sa surgélation.
La figure 4 représente un schéma du film convoyeur et de la machine de surgélation situés en aval des dispositifs de dépôt illustrés aux figures 2 et 3.

Bien entendu, les différents matériels illustrés dans ces figures ne le sont qu'à titre indicatif, et l'invention peut être mise en oeuvre de diverses manières tout en restant conforme aux principes évoqués précédemment.

### Manière de réaliser l'invention

### 1) Broyat de fruits et/ou de légumes

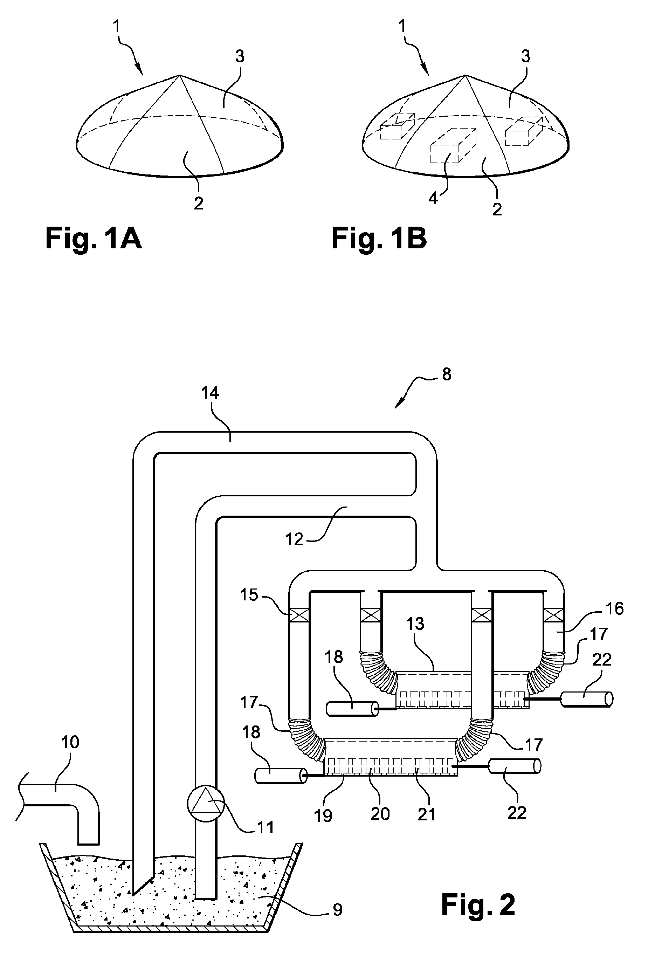

Ce mode de réalisation va être illustré pour un mélange pomme/framboise. Le dispositif de dépôt adapté est celui représenté à la figure 2. La pomme présente un degré Brix de 11 et la framboise de 10. Après tri, lavage, mélange et broyage, du sucre cristallin est ajouté au broyat à hauteur de 5%.

La préparation alimentaire à base des fruits broyés est alors amenée par un système pompe/tuyaux au réservoir **(9)** du dispositif de dépôt **(8).** Elle débouche dans le réservoir **(9)** par le tuyau **(10).** La préparation alimentaire est alors acheminée par un nouveau système pompe/tuyaux vers le dispositif de distribution **(13).** La pompe **(11)** tourne de 120 à 450 tours/min suivant le produit. Le tuyau d'acheminement **(12),** dans sa partie horizontale située au-dessus du système de distribution **(13),** se divise en deux parties. Une partie **(14)** retourne vers le réservoir **(9),** ce qui permet de recycler le trop plein du système de distribution **(13).** L'autre bifurcation du tuyau d'acheminement **(12)** alimente un système de distribution double **(13).** Pour faciliter une distribution homogène de la préparation alimentaire, le tuyau d'acheminement **(12)** se décompose en 4 bras verticaux **(16),** débouchant à chaque extrémité du système de distribution double **(13).** Ces bras verticaux sont munis de vannes **(15)** permettant de contrôler leur alimentation et de soufflets **(17)** en forme de coudes, permettant un mouvement de va et vient latéral du système de distribution **(13).** Le système de distribution **(13)** se présente sous la forme d'un cylindre relié à un vérin **(18)** qui l'entraîne dans un mouvement de va et vient latéral. Sur sa face inférieure, chaque cylindre **(13)** est doté sur toute sa longueur d'orifices **(19)** de diamètre 8 mm environ. A l'intérieur de chaque cylindre **(13)** est disposé à l'aplomb des orifices **(19),** un autre cylindre **(20)** également muni d'ouvertures traversantes **(21).** Le diamètre de ces ouvertures **(21),** avantageusement inférieur ou égal à celui des orifices **(19),** permet de contrôler la quantité de préparation alimentaire passant à travers les orifices. Cette structure interne **(20)** est également animée d'un mouvement de va et vient latéral dans le cylindre **(13),** au moyen d'un vérin **(22).** En pratique, au repos, le cylindre **(20)** bouche les orifices **(19).** Lorsque le système de distribution **(13)** atteint les positions distales du mouvement de va et vient sous l'action du vérin **(18),** le cylindre interne **(20)** subit une translation et ses ouvertures **(21)** viennent coïncider avec les orifices **(19)** du cylindre formant le système de distribution **(13).** Des gouttes de préparation alimentaire sont alors déposées. Au moment du dépôt, la température de la préparation alimentaire est comprise entre 2 et 4°C. Un autre paramètre important pour la viscosité de la préparation déposée est la hauteur parcourue par la préparation sous la force de gravitation, à savoir de 15 à 20 cm dans le cas présent entre les tuyaux **(12)** et **(14).**

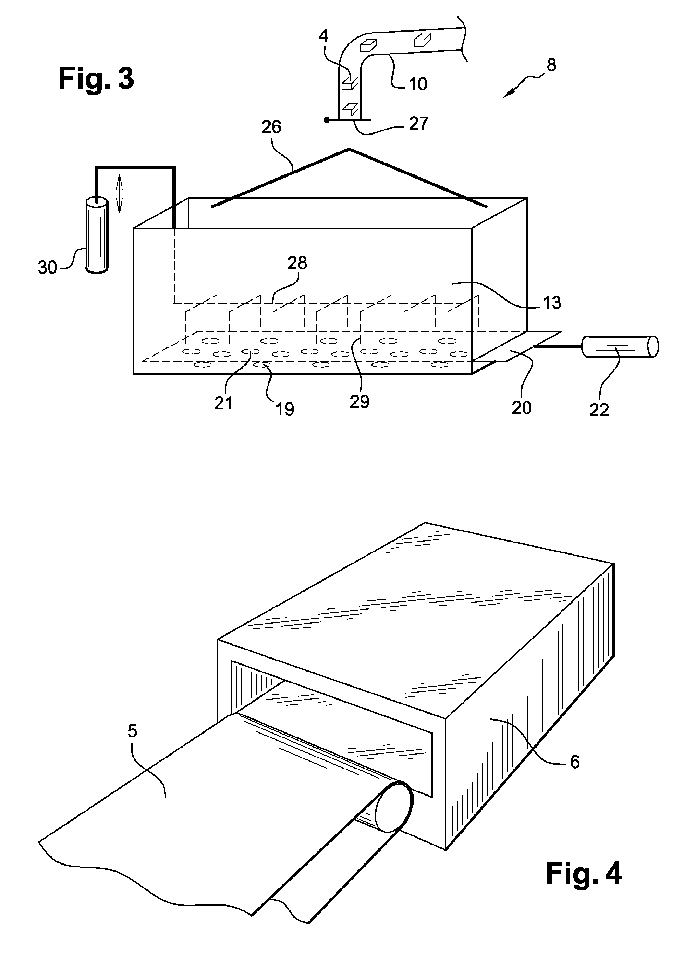

Comme représenté à la figure 4, le dépôt est réalisé sur un film convoyeur **(5)** qui entre dans un tunnel de surgélation à azote **(6).** La vitesse de déroulement du film convoyeur **(5)** est telle que le dépôt est soumis à une température approximative de - 55°C pendant environ 4 à 5 min. A l'issue du parcours, les palets ainsi obtenus (Fig. 1A) sont prêts à être ensachés. Leur température au coeur est d'environ -35°C et peut être ramené à -10°C en environ 3 heures. Ces palets **(1)** d'environ 3 g, présente donc une face plane unique **(2)** de dimension proche de 25 mm, surmontée d'un monticule **(3)** d'une épaisseur d'environ 2-3 mm.

De tels palets présentent l'avantage d'être conditionnés en petite quantité, de pouvoir être décongelés en un temps rapide et de ne pas coller.

### 2) Broyat de fruits et/ou de légumes avec morceaux

Le dispositif de dépôt **(8)** à mettre en oeuvre pour un dépôt de broyat comprenant des morceaux **(4)** est illustré à la figure 3. Il est notamment utile dans la surgélation de la compote de poire (12 Brix), incorporant de 40 à 70% en poids de morceaux de poire de 5 à 12 mm.

Le broyat de fruits et/ou de légumes et les morceaux de fruits et/ou de légumes **(4)** sont préparés extemporanément, comme décrit ci-dessus. Ils sont également mélangés extemporanément puis le mélange est acheminé à l'aide d'un tuyau **(10)** et d'un système de pompe (non représenté). Le tuyau **(10)** débouche au sommet d'un répartiteur **(26)** ayant la forme d'un entonnoir retourné, disposé au-dessus du système de distribution **(13).** Le mélange s'écoule à la surface de ce répartiteur **(26)** et se trouve ainsi distribué de manière homogène dans le système de distribution **(13).** L'alimentation en mélange peut être régulée grâce à la présence d'une vanne **(27)** au niveau du tuyau **(10).** Dans ce cas de figure, la pression du dépôt dépend directement de la hauteur de préparation alimentaire présente dans le système de distribution **(13),** généralement comprise entre 20 et 40 cm.

Dans ce dispositif, le système de distribution **(13)** se présente sous la forme d'un parallélépipède rectangle, alimenté dans sa partie supérieure en broyat et en morceaux, et muni d'orifices **(19)** en son fond. Le diamètre des orifices est d'environ 2 cm, de manière à laisser passer les morceaux. Au repos, ces orifices **(19)** sont obstrués par une plaque **(20)** également munie d'ouvertures **(21).** Le diamètre de ces ouvertures **(21),** avantageusement inférieur ou égal à celui des orifices **(19),** permet de contrôler la quantité de préparation alimentaire passant à travers les orifices. Cette plaque **(20)** est animée d'un mouvement de va et vient latéral dans le réservoir **(13),** via un vérin **(22),** permettant ainsi le dépôt séquentiel.

En outre, le réservoir est équipé d'un râtelier **(28)** animé d'un mouvement vertical via un vérin **(30).** Ce râtelier est équipé de dents **(29),** qui en position basse du râtelier, viennent à l'aplomb des orifices **(19)** du fond du réservoir **(13).** Le rôle de ce râtelier **(28)** est double :
- par son mouvement de va et vient, il assure un mélange et une répartition homogène des morceaux **(4) ;**
- il exerce une pression sur les morceaux au moment du dépôt, également dans un but d'homogénéité, selon la séquence : descente des dents **(29) -** ouverture des orifices **(19) -** passage du broyat et des morceaux **(4) -** fermeture des orifices **(19)** - montée des dents **(29).**

Après le dépôt, les étapes de surgélation et de récupération sont comme décrites pour l'exemple précédent.

On obtient des palets tels que schématisés à la figure 1B, de masse environ 8 g, qui ne collent pas et qui sont prêts à l'emploi.

## Revendications

1. Préparation alimentaire surgelée à base de fruits et/ou de légumes broyés se présentant sous la forme d'un palet (1) doté d'une face sensiblement plane unique servant de base **(2)** surmontée d'un monticule **(3).**

2. Préparation alimentaire surgelée selon la revendication 1 ***caractérisée* en ce qu'**elle présente un degré Brix inférieur ou égal à 20.

3. Préparation alimentaire surgelée selon la revendication 1 ou 2 ***caractérisée* en ce qu'**elle contient des morceaux de fruits et/ou de légumes **(4).**

4. Procédé de surgélation d'une préparation alimentaire à base de fruits et/ou de légumes broyés comprenant les étapes suivantes :
- éventuellement correction du degré Brix de la préparation alimentaire;
- dépôt par gravité et de manière séquentielle de la préparation alimentaire, sous la forme de gouttes individualisées, sur un film convoyeur **(5) ;**
- transfert du film convoyeur **(5)** dans une machine de surgélation **(6).**

5. Procédé de surgélation selon la revendication 4 ***caractérisé* en ce que** la préparation alimentaire contient des morceaux de fruits et/ou de légumes **(4)** et qu'une poussée est exercée sur la préparation alimentaire au moment du dépôt.

6. Procédé de surgélation selon la revendication 4 ou 5 ***caractérisé* en ce que** la surgélation dans la machine de surgélation **(6)** est réalisée à l'aide d'un liquide cryogénique, tel que l'azote.

7. Dispositif pour le dépôt, en vue de la surgélation, d'une préparation alimentaire à base de fruits et/ou de légumes broyés comprenant :
- un réservoir **(9, 13)** contenant la préparation alimentaire;
- un système de distribution **(13)** de la préparation alimentaire muni d'orifices **(19)** à ouverture séquentielle permettant le dépôt de gouttes individualisées ;
- un système de régulation de la pression régnant sur la préparation alimentaire au niveau des orifices **(19).**

8. Dispositif pour le dépôt, en vue de la surgélation, d'une préparation alimentaire selon la revendication 7 ***caractérisé* en ce qu'**il comprend un système de régulation de la température de la préparation alimentaire.

9. Dispositif pour le dépôt, en vue de la surgélation, d'une préparation alimentaire selon la revendication 7 ou 8 ***caractérisé* en ce que** le système de distribution **(13)** comprend une structure **(20),** munie d'ouvertures **(21)** et animée d'un mouvement de va et vient latéral via un vérin **(22),** permettant la coïncidence séquentielle avec les orifices **(19)** présents au fond du système de distribution **(13).**

10. Dispositif pour le dépôt, en vue de la surgélation, d'une préparation alimentaire selon l'une des revendications 7 à 9 ***caractérisé* en ce qu'**il comprend un système de pompe **(11)** et de tuyaux **(10, 12, 16)** pour acheminer la préparation alimentaire entre le réservoir **(9)** et le système de distribution **(13).**

11. Dispositif pour le dépôt, en vue de la surgélation, d'une préparation alimentaire selon l'une des revendications 7 à 10 ***caractérisé* en ce qu'**il comprend des moyens de réintroduction **(14)** du trop plein du système de distribution **(13)** dans le réservoir **(9).**

12. Dispositif pour le dépôt, en vue de la surgélation, d'une préparation alimentaire selon l'une des revendications 7 à 11 ***caractérisé* en ce que** le système de distribution **(13)** est doté d'un mouvement de va et vient latéral synchronisé avec l'ouverture des orifices **(19)** avantageusement à l'aide d'un vérin **(18),** en vue du dépôt de la préparation alimentaire en quinconce.

13. Dispositif pour le dépôt, en vue de la surgélation, d'une préparation alimentaire selon l'une des revendications 7 à 9 ***caractérisé* en ce que** le système de distribution **(13)** est alimenté en préparation alimentaire contenant des morceaux de fruits et/ou de légumes **(4)** à l'aide d'un répartiteur **(26)** situé au dessus, lui-même alimenté à sa surface par un tuyau **(10)** dont le débit peut être contrôlé, notamment au moyen d'une vanne **(27).**

14. Dispositif pour le dépôt, en vue de la surgélation, d'une préparation alimentaire selon l'une des revendications 7 à 9 ou 13 ***caractérisé* en ce qu'**il comprend, dans le système de distribution, un râtelier **(28)** animé d'un mouvement de va et vient vertical, avantageusement assuré par un vérin **(30),** dont les dents **(29)** sont situées à l'aplomb des orifices **(19)** présents au fond du système de distribution **(13).**

15. Installation pour la surgélation de préparation alimentaire à base de fruits et/ou de légumes broyés comprenant :
- un dispositif pour le dépôt de la préparation alimentaire selon l'une des revendications 7 à 14 ;
- un tunnel de surgélation **(6)** dans lequel circule le film convoyeur **(5) ;**
- des moyens de récupération et de conditionnement de la préparation alimentaire surgelée se présentant sous la forme de palets individualisés dotés d'une face sensiblement plane unique servant de base surmontée d'un monticule.
